Europäisches Patentamt

European Patent Office

Office européen des brevets

(11) Publication number : **0 601 884 A2**

(12) # EUROPEAN PATENT APPLICATION

(21) Application number : **93309998.8**

(22) Date of filing : **10.12.93**

(51) Int. Cl.⁵ : **G01S 13/32, G01F 23/28**

(30) Priority : **10.12.92 GB 9225782**

(43) Date of publication of application :
**15.06.94 Bulletin 94/24**

(84) Designated Contracting States :
**NL SE**

(71) Applicant : **GEC-MARCONI LIMITED**
**The Grove,**
**Warren Lane**
**Stanmore, Middlesex HA7 4LY (GB)**

(72) Inventor : **Jubb, Lyndon Wayne**
**11 Manor Avenue**
**Littleover, Derby DE3 6EB (GB)**

(74) Representative : **Cockayne, Gillian et al**
**The General Electric Company plc**
**GEC Patent Department**
**Waterhouse Lane**
**Chelmsford, Essex CM1 2QX (GB)**

(54) **Distance measuring arrangement.**

(57)    A distance measuring arrangement includes means for modulating a transmitted microwave signal with a first pseudo-random noise code at 15 and an IF signal at 13. The returns are modulated with a second pseudo-random noise code at 18 which is identical in pattern to the first code but having a different frequency. When the two codes come into alignment, a detection peak is generated which is compared by processor 25 with a reference peak signal to give a time offset representative of the distance travelled by the transmitted signal. The arrangement is particularly useful for monitoring the levels of liquids in a tank

FIG. 1

EP 0 601 884 A2

# FIG.1A

Reference from synthesiser → Frequencer divider | Reset

10 kHz → Start Conversion → A/D Converter

Sync pulse → Flip flop | Set | Reset

Data ready

Microprocessor | Data

Reset

Delay

Shift register reset pulses

EP 0 601 884 A2

This invention relates to distance measuring arrangements and more particularly to those arrangements which use microwave transmissions and monitor received reflections.

There is a need to be able to measure the level of liquid in a tank, for example, to enable the volume of the contents to be accurately gauged. In many applications, such as where the liquid is oil, a very accurate level measurement is required because of the high value of the contents and the large sectional area of the tank.

One current technique for determining the level of oil in tanks involves using a float to indicate the liquid level and monitoring any changes in the float position using electromechanical transducers. However, it is difficult to obtain high accuracy with such a system, especially over large changes in the liquid level, because of the mechanical backlash within the system necessary to permit free movement of the float to follow changes in liquid levels. A further problem is that if the system requires replacement, repair or maintenance, it can be difficult to gain access to it. In many cases it is necessary to remove the arrangement from the tank. If the system is included in a tank from which quantities are metered as they are withdrawn and for which a level check is required to confirm the accuracy of the metering, it may therefore be necessary to cease such activities for relatively long periods of time whilst any fault is investigated. Furthermore, it may also be necessary to depressurise tanks in order to carry out any necessary maintenance procedures. In such cases, bringing the tank into service after replacement or maintenance procedures have been carried out may also require appreciable time. In some industries, this delay may prove very expensive.

The present invention seeks to provide an improved distance measuring arrangement which is particularly suitable for use in monitoring the levels of liquid within a tank. However, it is envisaged that the invention may have applications in other areas also where accurate distance measuring is required.

According to a first aspect of the invention, a distance measuring arrangement includes means for transmitting a microwave signal on which an intermediate frequency signal and a pseudo-random noise code have been modulated; means for receiving reflections of the transmitted signal; means for mixing the received signal with a second pseudo-random noise code identical in pattern to the transmitted pseudo-random noise code but having a different frequency; means for mixing the modulated received signal with a local oscillator signal to recover the IF signal modulated with both pseudo-random noise codes; and means for comparing the output of the last mentioned means with a reference to determine the time taken by the microwave signal from transmission to reception and hence the distance it has travelled.

Where the invention is employed in monitoring the level of liquid within a tank, say, reflections occur at the surfaces of the liquid and these can be detected to give the distance of the surface from the transmitting and receiving antenna, or antennas, and hence an indication of the volume of the contents. More complex processing may be carried out to take into account propagation characteristics of the liquid and gases within a tank and the possibility of reflections from different parts of the tank. For example, reflections may also be received from the base of the tank.

The invention is particularly advantageous in the measurement of high value liquids within a tank as it enables a very accurate measurement to be made of the level of the liquid. Furthermore, the arrangement may be positioned in a convenient location for inspection, maintenance, removal or replacement. This may be carried out without the necessity of access to the interior of a tank in many cases and enables such activities to be carried out with the minimum of interruption to the operation of a plant within which the tank is included.

The invention is particularly advantageous in that , because the microwave carrier signal is modulated by an IF signal, low frequency components may be used in the processing circuitry, giving high accuracy with low dependence on changes in temperature and other parameters. Furthermore the components are readily available and inexpensive. For example, it is possible to adjust the gain of the receive path at low frequencies rather than microwave frequencies, enabling large dynamic ranges to be accurately dealt with.

Another advantage which arises from the use of the invention is that the signal which is detected on receipt after modulation with the second pseudo-random noise code and the local oscillator signal is an AC signal. Thus, any DC offsets introduced by mixers within the system are not significant in the detection and measurement process.

Preferably, the reference is a reference signal derived from the first and second pseudo-random noise codes. This may be done by detecting when the codes come into alignment as one slides in time relative to the other because of the difference in frequencies. Such an alignment gives an accurate signal which may be used to correlate the transmitted signal with a reference signal to give an indication of the time taken during propagation of the microwave transmission. In one particularly advantageous embodiment, a circuit is included for providing a pulse when the two codes come into alignment and this pulse is used to reset the means for generating the pseudo-random noise codes. The reset signal may be arranged to restart the code generators prior to the time at which they come into alignment to ensure that the signal denoting coincidence is properly generated and received.

According to a second aspect of the invention, a distance measuring arrangement includes means for transmitting a microwave signal modulated with a first pseudo-random noise code; means for receiving reflections of the transmitted microwave signal; means for receiving reflections of the transmitted microwave signal; means for mixing the received signal with a second pseudo-random noise code signal identical in pattern to the first but having a different frequency; means for correlating the received mixed signal with a reference signal to determine the distance travelled by the microwave signal; and including means for resetting the code generators at the same relative time for each measurement. By employing the second aspect of the invention, the need for a comparison between the first and second codes for a coincidence signal to give a reference point is not necessary, reducing circuit complexity. Preferably, this aspect of the invention also includes means for modulating the transmitted microwave signal with an intermediate frequency signal.

Some ways in which the invention may be performed are now described by way of example with reference to the accompanying drawings, in which:

Figures 1 and 1A schematically illustrate an arrangement in accordance with the invention;

Figures 2 to 5 are explanatory diagrams relating to the operation of the arrangement of Figure 1;

Figures 6 and 6A show an alternative to the arrangement of Figure 1.

An arrangement for measuring the level of a liquid in a tank in accordance with the invention includes means for transmitting a microwave signal modulated with a pseudo-random noise code and detecting returns of the transmitted signal. The returned signal is combined with a second pseudo-random code and then correlated with a reference signal derived from the first and second codes. The time taken for the microwave signal to travel along the propagation path may then be determined, giving an indication of the distance involved. By knowledge of the propagation characteristics of the liquid within a tank, its level may be measured. The arrangement is described in greater detail below with reference to the figures.

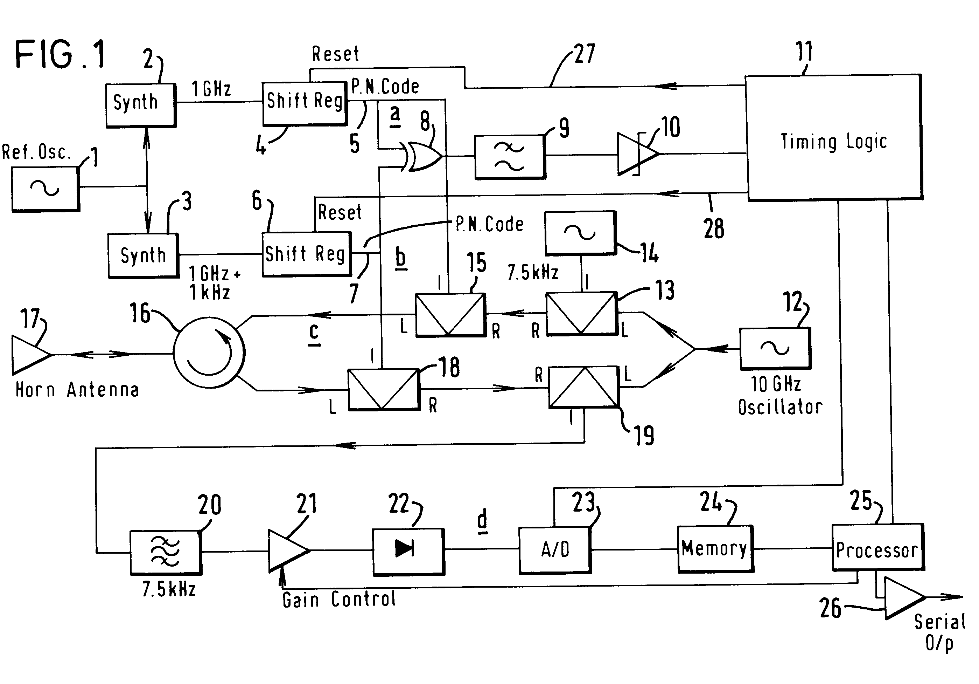

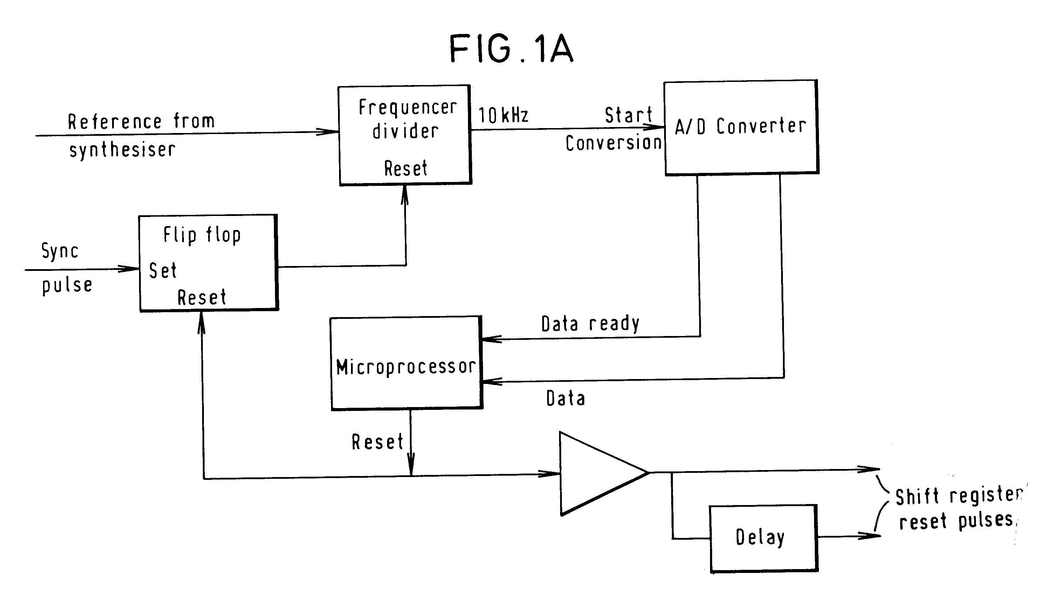

As shown in Figure 1, the arrangement comprises a reference oscillator 1, the output of which is applied in parallel to two synthesisers 2 and 3. The first synthesiser 2 has an output at 1 GHz and is used to drive a shift register 4 which generates a first pseudo-random noise code PN1, also referred to as the transmit code, at its output 5. The output of the second synthesiser 3 has an output of 1 GHz offset by 1 kHz which is applied to a second shift register 6. The second shift register 6 is identical to the first shift register 4 and generates a second pseudo-random noise code PN2 at its output, also referred to as the receive code, which has an identical pattern to PN1 but which is clocked at a faster rate. Thus the output signals of the first and second shift registers 4 and 6 produce code patterns whose alignment slowly changes with time. When the offset is as shown at 1kHz this results in the codes slipping by one chip length (1 ns) per millisecond.

The outputs of the shift registers 4 and 6 are combined at an exclusive OR gate 8 the output of which is transmitted via a low pass filter 9 and a comparator 10 to a timing logic circuit 11, shown schematically in Figure 1A. The exclusive OR gate 8 gives a detectable output at the instant when the codes are in perfect alignment and this is used to provide an accurate time zero reference for the timing logic circuit 11. The A/D sampling clock from circuit 11 is synchronised to the pulse which indicates when the shift registers 4 and 6 are in coincidence.

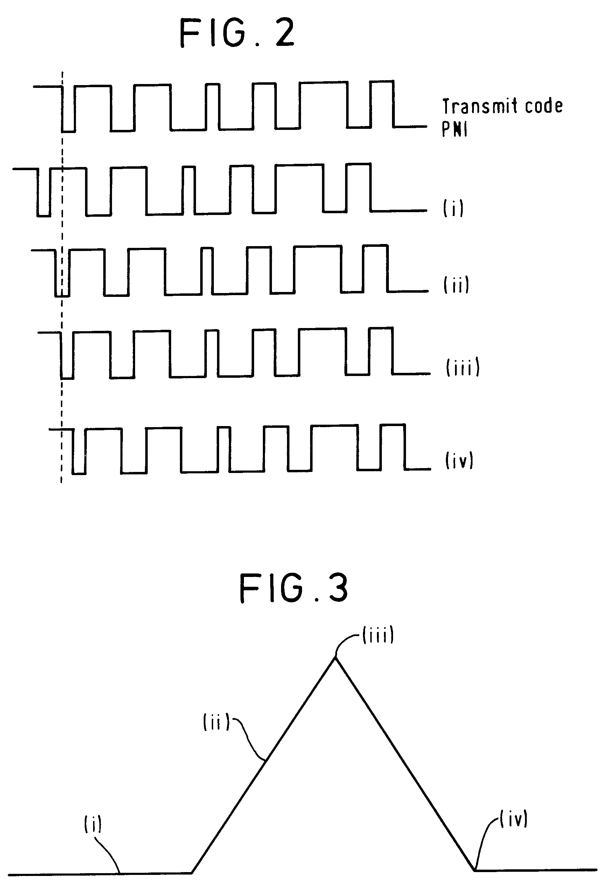

Figure 2 shows a section of the PN waveforms with varying delay. The transmit code PN1 appears at a on Figure 1 and waveforms (i) to (iv) appear at b and represent the received code PN2 sliding relative to PN1 with time. The variation of the filtered output from the exclusive OR gate 8 is the triangular peak shown in Figure 3.

In case (i), the receive code PN2 is in advance of the transmit code PN1 by more than a code clock period so the filtered output of the exclusive OR gate 8 is zero. Case (ii) shows the receive code PN2 half a clock period ahead of the transmit code PN1, which gives a 50% filtered output. When the codes are perfectly aligned, as in case (iii), the filtered output is at its peak, and falls linearly until the codes reach condition (iv) where the receive code PN2 is one clock period later than the transmit code PN1.

The code length of PN 1 and PN 2 is determined by the dynamic range of signals which must be simultaneously coped with. There is always a large return from zero range because of the reflection coefficient of the horn 17. Outside of one chip length from zero range, the effect of this is attenuated by a factor equal to the code length. If the wanted return is attenuated by up to 70dB and the return loss of the horn can be as poor as 10dB then the direct signal from the horn could be up to 60dB larger than the wanted signal. Using a shift register 15 bits long to generate the code PN1 and PN2 gives a code length of 32767 and a corresponding 90dB attenuation of the direct signal, leaving a 30dB margin to enable accurate interpolation of the position giving reflective returns to be made.

The microwave signal to be transmitted is derived from a 10 GHz oscillator 12, one output which is applied to a mixer 13 wherein it is mixed with an IF frequency at 7.5 kHz from a source 14 to give a double sideband signal. This is then applied to a double balanced mixer 15 where it is mixed with the transmit code PN1 from the first shift register 4 to produce a spread spectrum signal. The mixer diodes of mixer 15 are switched by the PN1 signal providing a rectangular form to the PN modulation to give good system resolution. The spread spectrum signal is transmitted by a circulator 16 and radiated from a transmit/receiver horn antenna 17.

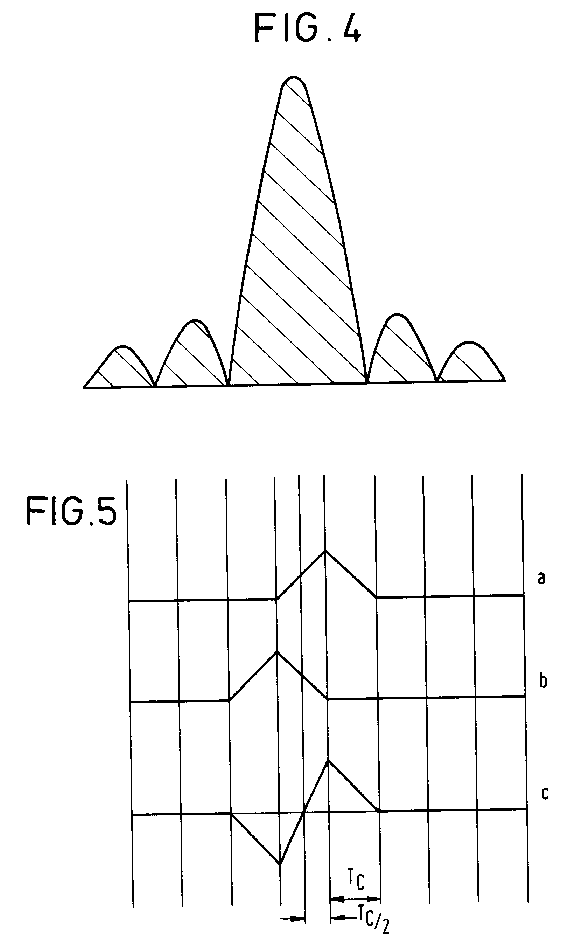

Since the system is required in this case to produce 1mm accuracy, the clock rate of the PN code must be as high as possible. The modulated PN signal shown at $\underline{c}$ of Figure 1 has a spectrum comprising closely spaced spectral lines with a sin (x)/x envelope as shown in Figure 4. This is centred on 10GHz with the nulls at multiples of 1GHz either side. If a single carrier without the IF offset were used then the individual spectral lines would be spaced by the repeat rate of the code, i.e. 1GHz ÷ 32767 giving 30kHz approximately. Since a double sideband carrier is used, however, the actual spectrum at $\underline{c}$ consists of two such spectra superimposed, one at an IF frequency below 10GHz and the other at an IF frequency above 10GHz. For optimum dynamic range, the receiver should respond to only one spectral line. This is achieved by appropriate choice of the IF frequency, such that the spectral lines from the two sidebands interleave. Since the two spectra are separated by twice the IF frequency, the condition for this is

$$2 \times f_i = (N + 1/2)f_c$$

where $f_i$ is the IF frequency, $f_c$ is the code repeat frequency and N is an integer. Thus selecting N=O (giving 7.5kHz) or N=1 (22.5kHz) gives an IF frequency which is low enough to use low cost audio frequency techniques for the IF circuitry. In this embodiment the chosen frequency is 7.5 kHz.

The transmitted microwave signal is reflected and received at the horn 17. The received signal is passed via the circulator 16 to another mixer 18 where it is mixed with the receive code PN2 having the same sequence as the transmitted code PN1 and sliding in time with respect to it. When the receive code PN2 is in alignment with that of received reflection, the output of the mixer 18 is a replica of the double sideband signal which fed the transmit PN modulator 15. The output of the mixer 18 is applied to another mixer 19 which is mixed with the output of the oscillator 12 to give a return at 7.5 kHz. This ac signal from the mixer 19 is applied via a bandpass filter 20 at 7.5 kHz and applied to a variable gain amplifier 21, the output of which is applied to a simple rectifier circuit 22 for detection via a linear AM demodulator. The output of the detector 22 at $\underline{d}$ on Figure 1 follows a similar curve as that shown in Figure 3 as the receive reference code passes through alignment with the delayed transmit code. The signal is digitised by an analogue to digital converter 23 and stored in a memory 24 for subsequent processing at 25.

The frequency offset between the codes PN1 and PN2 results in reflections separated by 1ns in the microwave signal (ie 150mm of range) appearing as peaks 1ms apart at the receiver output. In other words, the variation of the receiver output amplitude with time maps the microwave reflections versus range on a scale of 150 mm per ms. The data therefore arrives at a rate at which it can be easily digitised and stored. Fairly simple digital processing is required to identify the required return and accurately estimate its time of arrival. The accuracy of the time calibration is directly dependent on the frequency difference between the two PN code clocks which are therefore synthesised from a common crystal derived reference oscillator 1.

As a fairly long code length is necessary, allowing the code to complete a whole cycle at each shift register would take a long time. Therefore, when the time offset between the codes has reached the maximum range of interest, the shift registers 4 and 6 are reset by signals on lines 27 and 28 respectively from the timing logic circuit 11. The shift registers are set to state such that the measurement is recommenced from a slightly negative range. Thus, initially the shift register 4 and 6 produce codes which are slightly out of alignment and then a short time later come into alignment. This ensures that the zero reference pulse is produced from the exclusive OR gate 8.

The processor circuit 25 is responsible for both transferring the data from the analogue to digital converter 23 to the memory 24 and for analysing the data and so producing an output of the time of the required return. An IF attenuator 21 is under the control of the processor to maintain the signal at a suitable level. On power up reset, the processor circuit 25 also programs the synthesiser chip 2 and 3 to give the desired division ratios.

When it is ready for a new measurement cycle, the processor circuit 25 send a reset pulse to timing circuitry 11. This sends a pulse to the shift registers 4 and 6 which clears them and resets the divider for the A to D sampling clock. The A to D sampling clock is recommenced on arrival of a sync pulse, indicating range zero and derived ultimately from the exclusive OR gate 8. The processor circuit 25 waits for a status signal from the A to D converter to indicate that data is ready. The data is then transferred from the A to D converter 23 to the memory 24. Further data is similarly collected until sufficient samples have amassed to cover the whole 30m of range.

As the data arrives, its amplitude is checked to identify the second peak, that is, the first peak after the large range zero peak. If the amplitude of this peak is too large, ie. at maximum code from the analogue to digital converter or too small, the IF attenuation value is changed by a control signal on line 29 from the processor 25 and the measurement is restarted.

When suitable scaled data is available, the desired peak is searched for. Normally, this will be close to the peak found on the previous measurement, so that the search starts in that region. The exact location of the peak is found by interpolation between samples.

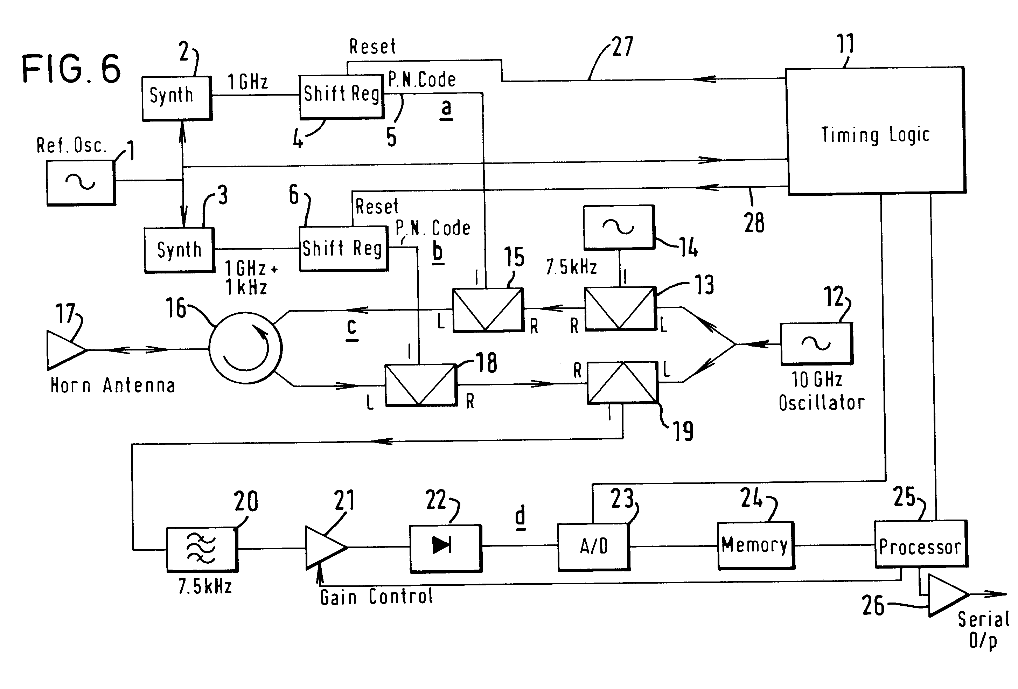

Figure 5 shows how a difference curve can be used to accurately estimate the position of the peak. Trace "b" represents the samples from one clock period earlier than trace "a". Trace "c" is generated by substracting trace "b" from trace "a". It can be seen that trace "c" crosses zero at a point mid-way between the peaks of traces "a" and "b". This zero crossing can be found accurately by interpolation, even if the peaks of the traces fall between sampling points.

To find the peak, a differential system is used. For each data point, the value of a sample one chip length behind the current sample is subtracted from the current value. This gives a curve which crosses zero at the peak of the data, the precise zero crossing point being easily estimated by interpolation.

If multiple echoes occur within one chip period, then accuracy can be improved by reducing the spacing between the samples which are subtracted.

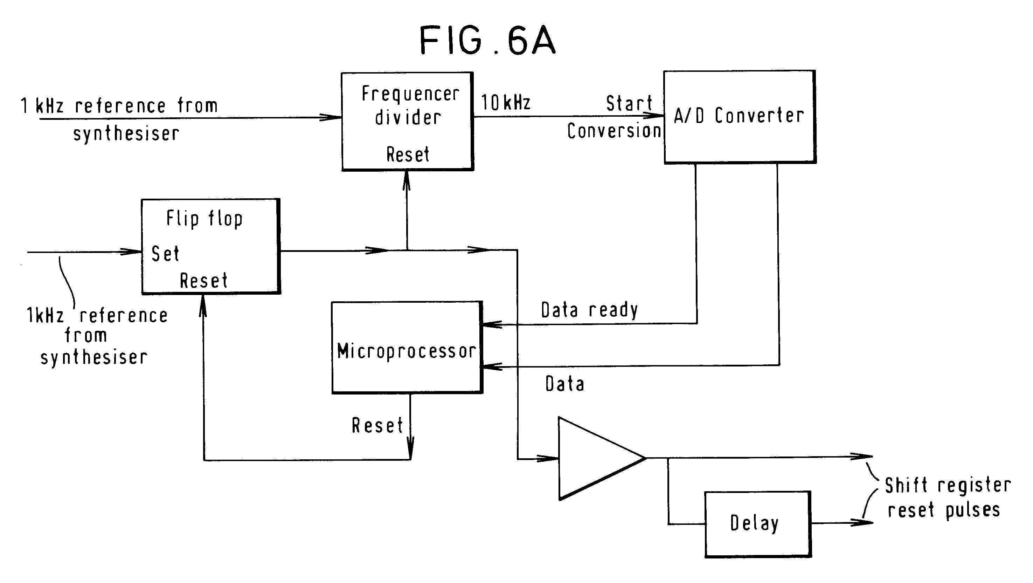

Another embodiment of the invention is shown in Figures 6 and 6A. This is similar to the arrangement of Figure 1, like references being used for like parts, but in this case the exclusive OR gate from which a synchronising pulse is derived has been omitted. Since the shift registers 4 and 6 are reset by the timing circuitry 11, it is not necessary to derive a synchronising pulse if it can be guaranteed that the shift registers are reset at exactly the same relative time each measurement. Since the actual timing of the shift register changing state is synchronised to its clock, this implies that the 1GHz clock and the 1GHz + 1kHz clocks must be in the same relative phase at the time of reset. The relative phase of the two clocks changes in step with the 1kHz difference frequency which is available from the frequency synthesisers 2 and 3. Thus provided the resetting of the A/D sampling clock is synchronised to the 1kHz difference frequency from the synthesisers, the timing of the samples will always be the same with respect to the code phase. Hence synchronisation is implicit. The block diagram of the timing circuit is shown in Figure 6A.

## Claims

1. A distance measuring arrangement including: means for transmitting a microwave signal on which an intermediate frequency signal and pseudo-random noise code have been modulated; means for receiving reflections of the transmitted signal; means for mixing the received signal with a second pseudo-random noise code identical in pattern to the transmitted pseudo-random noise code but having a different frequency; means for mixing the modulated received signal with a local oscillator signal to recover the intermediate frequency signal modulated with both pseudo-random noise codes; and means for comparing the output of the last mentioned means with a reference to determine the time taken by the microwave signal from transmission to reception and hence the distance it has travelled.

2. An arrangement as claimed in claim 1 and including means for generating the first and second pseudo-random noise codes and wherein the reference is a reference signal derived from the first and second codes.

3. An arrangement as claimed in claim 2 and including means for producing the reference signal by detecting when the codes come into alignment as one slides in time relative to the other at the outputs of the generating means.

4. An arrangement as claimed in claim 2 or 3 wherein means for generating the first and second pseudo-random noise codes are reset to states prior to that at which the generated codes come into alignment.

5. A distance measuring arrangement including: means for transmitting a microwave signal modulated with a first pseudo-random noise code; means for receiving reflections of the transmitted microwave signal; means for mixing the received signal with a second pseudo-random noise code identical in pattern to the first code but having a different frequency; means for correlating the received mixed signal with a reference signal to determine the distance travelled by the microwave signal; and including means for resetting the code generators at the same relative time for each measurement.

6. An arrangement as claimed in claim 5 and including means for modulating the transmitted microwave signal with an intermediate frequency signal.

7. An arrangement as claimed in any of claims 1 to 4 or claim 6 wherein the intermediate frequency signal has a frequency given by
$$2f_i = (N + \tfrac{1}{2}) f_c$$
where N is an integer and $f_c$ is the code repeat frequency.

8. An arrangement as claimed in claim 7 where in N is one of N = O and N = 1.

9. An arrangement as claimed in any preceding claim and including a reference oscillator; first and second synthesizers to which the output of the oscillator is applied in parallel; a first shift register which is driven by the first synthesizer to generate the first pseudo-random noise code signal; and a second shift register identical to the first which is driven by the second synthesizer to generate the second pseudo-random noise code signal.

10. An arrangement as claimed in claim 9 wherein the shift registers are fifteen bits long.

11. An arrangement as claimed in any preceding claim and including means for detecting a peak when the first pseudo-random noise code on the received signal is in alignment with the second pseudo-random noise code mixed with the received signal, the peak being compared with the reference.

12. An arrangement as claimed in claim 11 wherein the means for detecting the peak includes comparing samples from one clock period with those from a subsequent clock period to obtain a difference signal and determining the zero crossing point.

13. Apparatus for monitoring the level of liquid in a tank including an arrangement as claimed in any preceding claim.

# FIG.1

EP 0 601 884 A2

# FIG.1A

Reference from synthesiser

Frequencer divider

Reset

10 kHz

Start Conversion

A/D Converter

Sync pulse

Flip flop

Set

Reset

Data ready

Microprocessor

Data

Reset

Delay

Shift register reset pulses

EP 0 601 884 A2

EP 0 601 884 A2

# FIG . 2

Transmit code
PN1

(i)

(ii)

(iii)

(iv)

# FIG . 3

(iii)

(ii)

(i)

(iv)

# FIG.4

# FIG.5

a

b

c

$T_C$

$T_C/2$

FIG. 6

EP 0 601 884 A2

# FIG.6A

1 kHz reference from synthesiser

Frequencer divider

Reset

10 kHz

Start Conversion

A/D Converter

Flip flop

Set

Reset

1kHz reference from synthesiser

Data ready

Microprocessor

Data

Reset

Delay

Shift register reset pulses

EP 0 601 884 A2